# EUROPEAN PATENT SPECIFICATION

(11) **EP 0 394 572 B1**
(45) Date of publication and mention of the grant of the patent: **28.06.1995**
(21) Application number: 89304178.0
(22) Date of filing: 26.04.1989
(51) Int. Cl.: G11B 21/08, G11B 5/55

(54) **Data storage device**
Datenspeicherungsvorrichtung
Dispositif de mémorisation de données

(43) Date of publication of application: 31.10.1990
(73) Proprietor: International Business Machines Corporation, Armonk, N.Y. 10504 (US)
(72) Inventor: Wallis, Christopher Norman, Winchester Hampshire, S023 8JT (GB)
(74) Representative: Burt, Roger James, Dr.

(56) References cited:
- WO-A-85/01379
- US-A- 4 210 941
- US-A- 4 591 933
- IBM TECHNICAL DISCLOSURE BULLETIN. vol. 19, no. 7, December 1976, NEW YORK US pages 2734 - 2734; J.C.DAVY AND AL: "TEMPERATURE CONTROLLED DISK ACTUATOR"
- PATENT ABSTRACTS OF JAPAN vol. 4, no. 160 (P-35)(642) 8 November 1980,& JP-A-55 108966 (NIPPON DENKI K.K.) 21 August 1980,

## Description

This invention relates to the field of data storage devices. More particularly this invention relates to data storage devices in which the data is held on a rotatable data storage medium, the data being accessed by a data head movable between differing positions, eg hard or floppy discs devices, laser discs devices etc.

The data is typically organised into tracks which themselves are split into sectors. When the device receives the instruction to access a particular block of data it moves the data head to the correct radial position and then starts reading or writing as the appropriate sector passes under the data head.

It is a constant aim with such data storage devices that the time taken to access a given record be reduced to a minimum. To achieve a reduction in access time much effort is expended upon providing data storage devices in which the data head is moved between tracks in the shortest possible time.

One such data storage device is shown in United States Patent No 4591933. When initialising this device, the rate at which the data head is moved between positions is steadily increased until errors in the movement start to be detected. The rate is then slightly reduced and the device operates on this basis unless further errors are detected in which case the rate is reduced further.

US-A-4210941 discloses a disc in which the sector start/stop positions on adjacent tracks are positioned to have an angular spacing such that in the time taken to move between adjacent tracks the disc will rotate by this angular spacing.

Viewed from one aspect the present invention provides a data storage device for use with a rotatable data storage disc, the device having a data head and a controller for controlling movement of said data head between first and second positions on the storage disc, each position being defined by a radial track position and a rotational position characterised in that the controller is responsive to a request to move said data head from a current first position to said second position to calculate an access time for moving said data head between said first and second positions, the access time being greater than the minimum possible time for moving between said first and second track positions, so as to coordinate the arrival of said moving head at said second track position with the arrival of said second rotational position on the rotating disc at said head.

In the prior art the aim has been to produce the fastest possible movement between tracks to improve data access times. However, the present invention recognises that producing the fastest possible intertrack movement on every occasion does not necessarily produce the fastest overall data access performance. The present invention provides an extra degree of freedom in the operation of the device which allows the overall performance of the device to be improved, eg the data access times may be reduced, more reliable operation achieved etc.

One particular problem in the prior art devices is that heat build up in the mechanism moving the data head can limit the rate at which the device may be driven. With the prior art devices the data head was moved between positions as fast as possible even though the portion required to be accessed would not have rotated into position beneath the data head until some time after the data head had arrived at the desired position. The data head would in such circumstances have been moved more rapidly than was necessary and since increasing rate of movement results in increasing heat generation the mechanism would have been heated more than was necessary.

By coordinating the movement of the data head between positions so that it reaches the desired position only as quickly as necessary to be in place as the portion of the rotatable data storage medium to be accessed arrives at the data head then the heat build up in the mechanism moving the data head is reduced without increasing the data access time. In the prior art the data head was moved needlessly rapidly between positions and sat in place on the track to be accessed waiting for the correct portion of the rotatable data storage medium to rotate into position beneath the data head.

In preferred embodiments said controller establishes a target time for moving said data head between given positions as the time taken for said rotatable data storage medium to rotate from its sensed rotational position to the rotational position in which it is to be accessed by said data head. Such a determination provides a direct and simple method of establishing the target time for moving said data head between positions.

It will however be appreciated that the target time as determined above may be less than the minimum time in which the device is able to move said data head between those positions. To take account of this said controller increases said target time by amounts equal to the time taken for one revolution of said rotatable data storage medium until said target time is greater than than the minimum possible time for moving between those positions.

The problem of heat build up in the mechanism moving the data head between positions is particularly relevant to magnetic disc data storage devices and can be acute in those in which a voice coil actuator moves said data head between positions since to reduce the response time it is desirable to reduce the mass and size of the voice coil actuator which makes it vulnerable to heat build up. The present invention is thus particularly relevant to such devices.

In the case of devices with voice coil actuators the data head may be moved between given positions by accelerating it to a fixed coasting velocity, allowing it to coast and then decelerating it so that it comes to rest at the desired position. It will be appreciated that there are many other ways in which the movement if the data head between positions is controlled, e.g. the acceleration and deceleration rates may be varied to vary the time taken to move between rest and the coast velocity. Such alternative methods of controlling the movement of the data head may be adapted to operate in accordance with the present invention whereby the time taken for movement is responsive to the state of the device. In preferred embodiments of the present invention said data head is moved between given positions by accelerating said data head to a velocity dependent upon the state of the device, allowing said data head to coast and then decelerating said data head so that said data head comes to rest at the desired position. The coast velocity may be less than the in the prior art devices without increasing access time as discussed above and in such cases the heat generated in the voice coil to carry out the necessary acceleration and deceleration will be less than in the prior art fixed coast velocity type of operation.

The above has described how the present invention may be used to enhance the performance of the data storage device by coordinating the movement of the data head with the rotational position of the rotatable data storage medium so that the movement is not needlessly fast. The extra flexibility afforded by the present invention may be used in other ways.

In the prior art the design of data storage devices has involved making many worst case assumptions. One example of this has been that the devices have been designed so that they should not overheat even under the heaviest possible use. To achieve this it has been necessary to reduce the speed of movement of the data head so that the heat generated could be tolerated even under continuous use.

In particularly preferred embodiments of the present invention said controller monitors the temperature of a mechanism for moving said data head and increases the time taken to move said data head between given positions if a predetermined temperature is exceeded. By employing this feature of the present invention the data head may be moved between positions at the maximum possible rate without risk of overheating. The data head may be moved at speeds which the device could not continuously maintain and then if overheating is sensed the time for moving the data head may be increased to a slow enough value to avoid overheating.

The temperature of the mechanism for moving the data head may be monitored using a direct temperature sensor, such as a thermistor, or alternatively the temperature may be inferred from the movements of the data head which have been carried out. The later way of monitoring the temperature is particularly appropriate if a microprocessor is being used as the controller since the temperature may be inferred by calculation without the need for extra sensors, communication channels or wiring. If the temperature is inferred then a possible problem may arise if the device loses its inferred value of the temperature when it is switched off. In order to avoid any possibility of overheating the device can arranged to assume the maximum possible temperature when it is switched on. Such an assumption would detract from the initial performance of the device but this effect would only last until the usage was such that voice coil could be inferred to have cooled (typically a few minutes).

A particular embodiment of the present invention will now be described, by way of example only, with reference to the accompanying drawings in which:

Figure 1 schematically illustrates the way in which the target time for moving between positions is established.

Figure 2 schematically illustrates the way in which the temperature of the mechanism for moving the data head is monitored.

Figure 3 schematically illustrates the way in which the control of transfer into the coast phase is carried out.

There are many possible ways in which the present invention may be implemented, e.g. a digital or analogue implementation is possible. The embodiment described below is intended for implementation in a digitally controlled disc drive. The control microprocessor present in such a disc drive can be reprogrammed to carry out the control system of the present invention in a conventional manner which need not be described in detail. Reference should be made to the seek/track follow system described in European Patent No. 13326, which although described as an analogue circuit is readily adaptable to a digital implementation.

In the Figures herein described the blocks indicate data processing functions and the lines indicate variables passed between these functions.

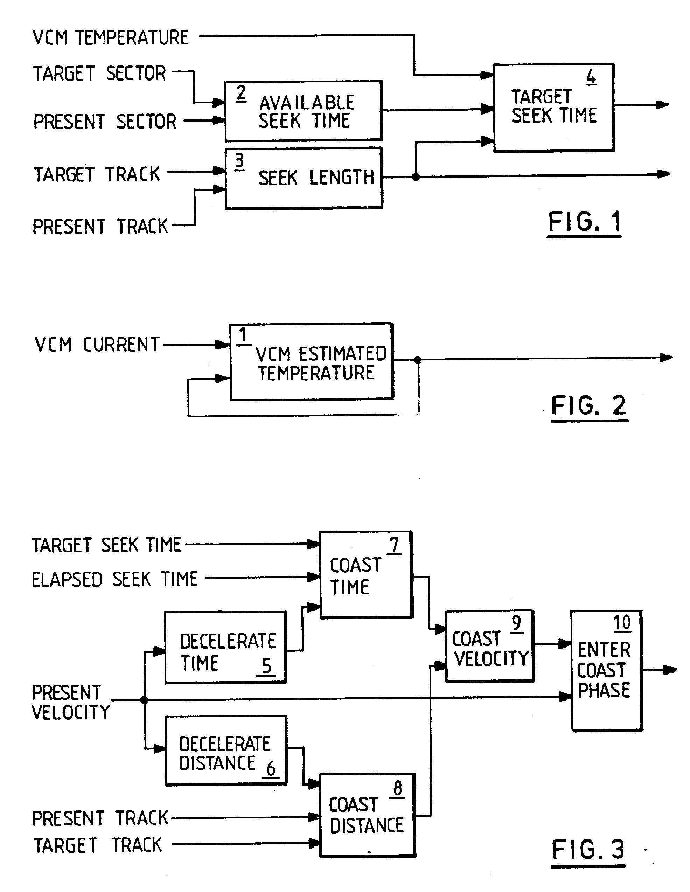

Figure 1 schematically illustrates how the target time for moving the data head between positions is established at the start of each seek. The information available to the controller includes the present sector and track over which the data head is positioned and the sector and track which is desired to be read. The controller is also provided with a signal indicating the voice coil motor temperature. The generation of this signal will be described further in relation to Figure 2. The present and target sector and track signals are be generated in prior art disc drives in various manners such as mechanical sensors coupled to the actuator assembly and rotation drive spindle or sensed and monitored from the signals read by the data head.

A signal commensurate with the available seek time is determined by calculating the number of sectors between the present position and the target position. This may be achieved by subtracting the present sector number from the target sector number. The sectors are numbered to increase in value in the direction of rotation and the number of sectors on each track is constant. If the result of the subtraction is negative this indicates that the data head has already passed over the target sector on that rotation and to determine the available seek time the total number of sector on the track is added to the negative result.

A signal commensurate with the seek length is determined by evaluating the modulus of the difference between the target track number and the present track number.

The target seek time is determined in the following manner from the available seek time, the seek length and the voice coil temperature. A value commensurate with the least possible time it would take to move between those tracks is determined by means of a look up table of predetermined values using the calculated seek length. This is the so called 'flat out time' In practice the prior art devices would carry out the movement in a time greater than this 'flat out time' in order to take account of unmodelled effects such as heating. Next, the target seek time is set equal to the available seek time. The target seek time is then compared with the flat out time and if it is less than the flat out time then it is increased by amounts corresponding to the time of rotation of the data storage medium until the target seek time is greater than the flat out time. At this point the target seek time will have a value which should result in the data head arriving at the portion to be accessed just in time to access that portion and with a total access time not longer than in the prior art devices which are driven at the maximum possible speed and arrive at the target track before the portion to be accessed has rotated to beneath the data head.

Figure 2 illustrates how the temperature of the voice coil motor is monitored. The current through the voice coil motor is sampled and the heat dissipated in the coil can be calculated as proportional to the square of this current multiplied by the coil resistance. The coil resistance will vary with temperature but if desired this second order effect can be ignored. At the same time the amount of heat lost from the coil of the previous cycle can be determined as proportional to the difference in temperature between the coil and its surroundings divided by the thermal resistance between the coil and its surroundings. Once the change in the heat content of the coil in that period has found the change in temperature this will produce can be determined as the change in heat content divided by the thermal capacity of the coil. The value of the coil temperature can then be updated.

Once the target seek time has been determined as described with reference to Figure 1 then a check is made to see if the coil temperature is such that to drive it to carry out the movement in the target time would overheat the coil. Varying levels of sophistication are possible but a calculation having the form outlined above can used to determine what temperature the coil would reach if so driven. If the temperature the coil would reach exceeds a predetermined safe level then the target seek time is increased by amounts equal to the period of one revolution of the data storage medium and the check repeated until a target seek time at which it is safe to drive the coil is reached. It can thus be seen how this method of control monitors the coil temperature and increases the movement time if a predetermined temperature is exceeded.

Figure 3 illustrates the control of the start of the seek movement before the mechanism enters the coast phase. During the phase illustrated in this Figure the mechanism is being accelerated. The information required to carry out this control is the target seek time established as described with reference to Figure 1, the elapsed seek time which can be timed by the controller, the target track and the present track which will be available as described previously, and the present velocity which could be monitored as the rate of crossing tracks. The control steps are carried out once per sector sensed passing beneath the data head.

The present velocity is used to index look up tables which yield the time it will take to decelerate from the present velocity (decelerate time) and the distance that will be cover whilst decelerating from the present velocity (decelerate distance). The time available for the coast phase is determined by subtracting the elapsed seek time and the decelerate time from the target seek time. The distance to be covered in the coast phase is found by subtracting the decelerate distance from the modulus of the difference between the target track and the present track. The coast velocity that would be required given the present state of the device is calculated by dividing the coast distance by the coast time. This calculated coast velocity is then compared with the present velocity and if the mechanism has attained the required coast velocity then the device will enter the coast phase. The rest of the movement may be controlled in a number of possible ways such as that described in European Patent No. 13326.

## Claims

1. A data storage device for use with a rotatable data storage disc, the device having a data head and a controller for controlling movement of said data head between first and second positions on the storage disc, each position being defined by a radial track position and a rotational position characterised in that:
the controller is responsive to a request to move said data head from a current first position to said second position to calculate an access time for moving said data head between said first and second positions, the access time being greater than the minimum possible time for moving between said first and second track positions, so as to coordinate the arrival of said moving head at said second track position with the arrival of said second rotational position on the rotating disc at said head.

2. A data storage device as claimed in claim 1, wherein said controller establishes a first time for moving said data head between said first and second positions as the time taken for said disc to rotate from its sensed first rotational position to the second rotational position and, if said first time is less than said minimum possible time for moving between said first and second track positions, increases said first time by amounts equal to the time taken for one revolution of said disc until said time is greater than the minimum possible time for moving between said first and second track positions to generate said access time.

3. A data storage device as claimed in any preceding claim, wherein a voice coil actuator moves said data head between positions.

4. A data storage device as claimed in any preceding claim, comprising a magnetic disc drive.

5. A data storage device as claimed in any preceding claim, wherein said data head is moved between track positions by accelerating it to a fixed coasting velocity, allowing it to coast and then decelerating it so that it comes to rest at the desired position.

6. A data storage device as claimed in any preceding claim, wherein said controller monitors the temperature of a mechanism for moving said data head and increases the access time taken to move said data head between given track positions if a predetermined temperature is judged as exceeding a safe level at such a velocity profile.

7. A data storage device as claimed in claim 6 as dependent on claim 3, wherein the temperature of said mechanism for moving said data head is inferred from the current of the voice coil during the movements of said data head which have been carried out.

8. A method of controlling the movement, in a data storage device, of a data head between first and second positions on a rotatable data storage disc, each position being defined by a radial track position and a rotational position; the method being characterised by:
in response to a request to move said data head from a current first position to a said second position, calculating an access time for moving said data head between said first and second positions, the access time being greater than the minimum possible time for moving between said first and second track positions, so as to coordinate the arrival of said moving head at said second track position with the arrival of said second rotational position on the rotating disc at said head.

## Patentansprüche

1. Eine Datenspeicherungsvorrichtung zur Verwendung mit einer rotierenden Datenspeicherplatte, wobei die Vorrichtung einen Datenkopf und einen Regler zur Steuerung der Bewegung dieses Datenkopfs zwischen ersten und zweiten Positionen auf der Speicherplatte hat, wobei jede Position durch eine radiale Spurposition und eine rotierende Position definiert wird, dadurch gekennzeichnet ist, daß
der Regler auf eine Anforderung reagiert, um diesen Datenkopf aus einer aktuellen ersten Position in diese zweite Position zu bewegen, um eine Zugriffszeit zur Bewegung dieses Datenkopfs zwischen den ersten und zweiten Positionen zu berechnen, wobei die Zugriffszeit größer als die geringstmögliche Zeit zur Bewegung zwischen diesen ersten und zweiten Spurpositionen ist, um so das Eintreffen dieses beweglichen Kopfes in der zweiten Spurposition mit dem Eintreffen der zweiten rotierenden Position auf der rotierenden Platte in diesem Kopf zu koordinieren.

2. Eine Datenspeicherungsvorrichtung wie in Anspruch 1 angemeldet, wobei dieser Regler eine erste Zeit zur Bewegung des Datenkopfs zwischen den ersten und zweiten Positionen als die Zeit erstellt, die für diese Platte erforderlich ist, um sich von ihrer geprüften ersten rotierenden Position in die zweite rotierende Position zu drehen und, falls diese erste Zeit kleiner als die geringstmögliche Zeit ist, die zur Bewegung zwischen den ersten und zweiten Spurpositionen erforderlich ist, wird die erste Zeit um Mengen erhöht, die gleich der Zeit sind, die für eine Umdrehung dieser Platte erforderlich ist, bis diese Zeit größer als die geringstmögliche Zeit zur Bewegung zwischen den ersten und zweiten Spurpositionen ist, um diese Zugriffszeit zu erzeugen.

3. Eine Datenspeicherungsvorrichtung wie in irgendeinem vorhergehenden Anspruch angemeldet, wobei ein Schwingspulenstellglied den Datenkopf zwischen den Positionen bewegt.

4. Eine Datenspeicherungsvorrichtung wie in irgendeinem vorhergehenden Anspruch angemeldet, der ein Magnetplattenlaufwerk enthält.

5. Eine Datenspeicherungsvorrichtung wie in irgendeinem vorhergehenden Anspruch angemeldet, wobei dieser Datenkopf zwischen Spurpositionen bewegt wird, indem dieser mit einer festen Auslaufgeschwindigkeit beschleunigt wird, was diesen auslaufen läßt und anschließend so verlangsamt, daß dieser in der gewünschten Position ruht.

6. Eine Datenspeicherungsvorrichtung wie in irgendeinem vorhergehenden Anspruch angemeldet, wobei der Regler die Temperatur eines Mechanismus zur Bewegung des Datenkopfs überwacht und die Zugriffszeit erhöht, die erforderlich ist, um diesen Datenkopf zwischen den gegebenen Spurpositionen zu bewegen, wenn eine zuvor bestimmte Temperatur dahingehend beurteilt wird, daß diese einen Sicherheitspegel in einem Geschwindigkeitsprofil überschreitet.

7. Eine Datenspeicherungsvorrichtung wie in Anspruch 6 angemeldet, der von Anspruch 3 abhängt, wobei die Temperatur dieses Mechanismus zur Bewegung des Datenkopfs von dem Strom der Schwingspule während der Bewegungen, die von diesem Datenkopf ausgeführt wurden, abgeleitet wird.

8. Ein Verfahren, um in einer Datenspeicherungsvorrichtung die Bewegung eines Datenkopfs zwischen ersten und zweiten Positionen auf einem rotierenden Datenträger zu steuern, wobei jede Position von einer radialen Spurposition und einer rotierenden Position definiert wird; wobei das Verfahren dadurch gekennzeichnet wird, daß, als Reaktion auf eine Anforderung, dieser Datenkopf aus einer aktuellen ersten Position in diese zweite Position bewegt wird, indem eine Zugriffszeit zur Bewegung dieses Datenkopfs zwischen den ersten und zweiten Positionen berechnet wird, wobei die Zugriffszeit größer als die geringstmögliche Zeit zur Bewegung zwischen diesen ersten und zweiten Spurpositionen ist, um so das Eintreffen dieses beweglichen Kopfes in der zweiten Spurposition mit dem Eintreffen der zweiten rotierenden Position auf der rotierenden Platte in diesem Kopf zu koordinieren.

## Revendications

1. Dispositif de mémorisation de données destiné à être utilisé avec un support d'informations sur disque rotatif, comprenant une tête d'accès aux données et un contrôleur pour contrôler le déplacement de ladite d'accès aux données entre une première et une seconde position sur le disque support d'informations, chaque position étant définie par une position de piste radiale et une position de rotation, caractérisé en ce que :
le contrôleur est sensible à une demande de déplacement de ladite tête d'accès aux données entre une première position courante et ladite seconde position pour calculer un temps d'accès pour déplacer ladite tête d'accès aux données entre ladite première et ladite seconde position, le temps d'accès étant supérieur au temps minimum possible de déplacement entre ladite et première et ladite seconde position de piste, afin de coordonner l'arrivée de ladite tête mobile sur ladite seconde position de piste avec l'arrivée de ladite seconde position de rotation sur le disque rotatif sous ladite tête.

2. Dispositif de mémorisation de données selon la revendication 1, dans lequel ledit contrôleur établit un premier temps pour déplacer ladite tête d'accès aux données entre ladite première et ladite seconde position comme étant le temps nécessaire au disque pour tourner de sa première position de rotation détectée à la seconde position de rotation et, si ledit premier temps est inférieur au dit temps minimum possible de déplacement entre ladite première et ladite seconde position de piste, augmente ledit premier temps par incréments égaux au temps nécessaire au dit disque pour accomplir une révolution complète, jusqu'à ce que ledit premier temps soit supérieur au temps de déplacement minimum possible entre ladite première et ladite seconde position de piste, pour générer ledit temps d'accès.

3. Dispositif de mémorisation de données selon l'une quelconque des revendications précédentes, dans lequel un positionneur à bobine mobile déplace ladite tête d'accès aux données d'une position à l'autre.

4. Dispositif de mémorisation de données selon l'une quelconque des revendications précédentes, comprenant une unité de disque(s) magnétique(s).

5. Dispositif de mémorisation de données selon l'une quelconque des revendications précédentes, dans lequel ladite tête d'accès aux données est déplacée entre des positions de piste en l'accélérant jusqu'à une vitesse de rotation par inertie déterminée, en la laissant tourner par inertie, puis en la décélérant afin qu'elle finisse sa course sur la position voulue.

6. Dispositif de mémorisation de données selon l'une quelconque des revendications précédentes, dans lequel ledit contrôleur contrôle la température d'un mécanisme pour déplacer ladite tête d'accès aux données et augmente le temps d'accès nécessaire pour déplacer ladite tête d'accès aux données entre des positions de piste données si une température prédéterminée est jugée comme excédant un niveau de sécurité à ce profil de vitesse.

7. Dispositif de mémorisation de données selon la revendication 6, dans lequel la température du dit mécanisme de déplacement de ladite tête d'accès aux données est déduite du courant de la bobine mobile au cours des déplacements précédents de ladite tête d'accès aux données.

8. Procédé pour contrôler, dans un dispositif de mémorisation de données, le déplacement d'une tête d'accès aux données entre une première et une seconde position sur un support d'informations à disque rotatif, chaque position étant définie par une position de piste radiale et une position de rotation; ledit procédé étant caractérisé en ce qu'il comprend l'étape consistant à:
en réponse à une demande de déplacement de ladite tête d'accès aux données entre une première position courante et une seconde position, calculer un temps d'accès pour déplacer ladite tête d'accès aux données entre ladite première et ladite seconde position, ledit temps d'accès étant supérieur au temps minimum possible de déplacement entre ladite première et ladite seconde position de piste, afin de coordonner l'arrivée de ladite tête mobile sur ladite seconde position de piste avec l'arrivée de ladite seconde position de rotation sur le disque rotatif sous ladite tête.
